# EUROPÄISCHE PATENTANMELDUNG

(11) **EP 2 030 496 A1**
(43) Veröffentlichungstag der Anmeldung: **04.03.2009**
(21) Anmeldenummer: 07115530.3
(22) Anmeldetag: 03.09.2007
(51) Int. Cl.: A01C 5/06

(54) **Gezogene Säscharanordnung**

(71) Anmelder: Horsch Maschinen GmbH, 92421 Schwandorf (DE)
(72) Erfinder: Lassen, Nis, 18569 Trent/Rügen (DE)
(74) Vertreter: Benninger, Johannes

(57) **Zusammenfassung**

Die vorliegende Erfindung betrifft eine von einer Zugmaschine gezogene Säscharanordnung bei der die Säscharen (40) unabhängig voneinander und unabhängig von Tragrad (30) und / oder Druckrollen (20) bei Hindernissen ausweichen können und mit einer einstellbaren Vorrichtung zur Rückverfestigung des Ackerbodens über dem Saatgut.
Die Saattiefe wird durch das Tragrad begrenzt und eingestellt können.
Eine gezogene Moduleinheit (10) Säscharanordnung gemäß der vorliegenden Erfindung weist mindestens eine, vorzugsweise zwei Säschare, ein Trag- / Führungsrad und / oder mehrere Druckrollen auf. Das Tragrad übernimmt die Funktion der Tiefenführung, während die Druckrollen oder Zustreichelemente, beispielsweise in Form von Striegeln, dazu dienen, die Furchen zu schließen und den Boden bei Bedarf rückzuverfestigen.
Die Säschare (40) befinden sich an Schartragarmen (52). Diese sind am Grundrahmen / Schartragrohr (18) schwenkbar angebracht und enthalten ein abstützendes Verbindungselement bzw. Mitnehmerelement (56), das auf dem Tragrad (30) tragenden Arm (50) aufliegt.

## Beschreibung

Die vorliegende Erfindung betrifft eine von einer Zugmaschine gezogene Säscharanordnung bei der die Säscharen unabhängig voneinander und unabhängig von Tragrad und / oder Druckrollen bei Hindernissen ausweichen können und mit einer einstellbaren Vorrichtung zur Rückverfestigung des Ackerbodens über dem Saatgut mit den Merkmalen des Oberbegriffs des Anspruchs 1.

### Stand der Technik

Säschare werden zum Einbringen von Saatgut in den Ackerboden verwendet. Die Säschare werden dabei an eine Zugmaschine angekoppelt und von diesem über das Feld gezogen. Sie verteilen das Saatgut in den Säfurchen und verteilen anschließend die Erde über dem Saatgut, welche zusätzlich noch rückverfestigt werden muss.

Bei der Aussaat sind mehrere Faktoren von Bedeutung. Zum einen muss eine dem Saatgut und der Bodenbeschaffenheit angepasste optimale Sätiefe eingestellt werden und zum anderen muss die Erde über dem Saatgut leicht angedrückt werden.

Aus diesem Grund werden Säschare häufig mit nachfolgenden Druckrollen kombiniert, die dazu dienen, die auf das Saatgut aufgebrachte Erde rückzuverfestigen. Die Druckrollen, welche unterschiedliche Breiten, Durchmesser und Profilgeometrien aufweisen können, laufen dabei je nach Gerät exakt auf den Reihen oder aber daneben. Die Druckrollen kombinieren dabei die oben genannten unterschiedlichen Aufgaben. Zum einen sind sie für die Tiefenführung und somit die Sätiefe verantwortlich und zum anderen führen sie zu einer Rückverfestigung des Saathorizonts.

EP 1 060 649 B1 beschreibt eine Säscharanordnung, bei der eine Tiefenführungs- und Druckanordnung pro rädchenförmigen Säschar durch Gummifederelemente verstellbar ist, wobei die Tiefenführungs- und Druckanordnung wahlweise vor, neben oder hinter der Säscharanordnung angeordnet sein kann.

EP 1 080 624 A1 beschreibt eine Sämaschine zum Ausbringen von Saatgut und / oder Dünger. Die Maschine enthält ein drehbares Tiefeneinstellrad, das seitlich neben einem Furchenöffner angeordnet ist. Die Rückverfestigung des Bodens erfolgt mittels eines Andrückrads, wobei das abgelegte Saatgut in der Furche angedrückt wird. Mittels eines Schließrads wird von der Seite Erdmaterial in die Furche geschoben, so dass diese verschlossen wird.

US 6 347 594 B1 beschreibt einen Furchenöffner, durch den Gut in die Furche eingebracht und die Furche darüber auch wieder geschlossen wird. Dabei weist ein erstes Rad die beiden Funktionen Tiefeneinstellung und Furchenschließung auf, wobei bei der Furchenschließung zusätzlich ein zweites Rad mitbeteiligt ist. Die Furchenschließung erfolgt, indem die beiden Räder den Boden über die Furche drücken, sobald Material in einem unteren Bereich der Furche abgelegt worden ist. Somit erfolgt die Rückverfestigung des Bodes zweifach, zum einen ist sie dabei mit der Tiefeneinstellung gekoppelt, die zusätzliche Furchenschließung erfolgt dagegen unabhängig von der Tiefeneinstellung. Das Rad stellt sich aufgrund seines Gewichtes mithilfe einer Feder bei Bodenkontakt entsprechend ein, so dass eine schnelle Antwort auf Bodenunebenheiten erfolgt.

DE 10 2004 023 087 A1 beschreibt eine Drillmaschine, bei der die Werkzeugträger, an denen die Säelemente befestigt sind, durch eine vordere und eine hintere Spiralblattfeder gehaltert sind, so dass die optimal eingestellte Ablagetiefe immer eingehalten wird. Druckrolle und Führungsrolle sind im beschriebenen Anwendungsbeispiel getrennt, wobei die höhenverstellbare Führungsrolle vor den Säelementen und die Druckrollen hinter den Säelementen angeordnet sind.

DE 103 47 142 A1 beschreibt hinter der Säschar angeordnete Rollen zur sicheren Tiefenführung, zum Schließen der Säfurchen und zum Andrücken des Saatguts, welche schräg zur Vertikalen einstellbar sind. Die Rollen sollen eine sichere Tiefenführung der Säschare auch bei breiten Säfurchen bewirken und zudem ein sicheres Schließen der Säfurche nach Ablage des Saatgutes erreichen.

Die Beschaffenheit des Ackerbodens wird durch verschiedene Faktoren beeinflusst. Dazu zählen u. a. die Zusammensetzung des Bodens, die dessen Kapazität zur Wasserspeicherung definiert, als auch die Feuchtigkeit bzw. Trockenheit des Bodens aufgrund der vorherrschenden Wetterverhältnisse. Daraus ergibt sich der Bedarf an unterschiedlichen Rückverfestigungsstrategien, um eine harte Erdkruste über dem Saatgut zu vermeiden. Diese entsteht durch Verschlemmung des Bodens und wirkt sich auf die Keimung des Saatgutes aus, da der zarte Keimling zuerst die Erdschicht durchdringen muss. Die bekannten Druckrollen verfestigen den Boden je nach Gerät mit mehr oder weniger Druck auf oder neben der Reihe, in der das Saatgut ausgebracht wurde. Verschiedene Böden benötigen aber verschiedene Strategien, so dass der Landwirt unter Umständen mehrere Säschare mit unterschiedlich geführten Druckrollen benötigt, die er nach Bedarf verwendet. Dadurch ergibt sich erhöhter Bedarf an Lagerkapazität, da die zusätzlichen Säschar - Druckrolle - Kombinationsgeräte gelagert werden müssen.

### Beschreibung

Das Ziel der Erfindung besteht darin, eine Vorrichtung zu bauen, bei der die Säschare unabhängig von dem Tragrad und / oder der Druckrolle bei Hindernissen ausweichen können. Außerdem soll die Saattiefe durch das Tragrad begrenzt und eingestellt werden können.

Dieses Ziel der Erfindung wird mit dem Gegenstand des unabhängigen Anspruchs erreicht. Merkmale vorteilhafter Weiterbildungen der Erfindung ergeben sich aus den abhängigen Ansprüchen.

Eine gezogene Moduleinheit Säscharanordnung gemäß der vorliegenden Erfindung weist mindestens eine, vorzugsweise zwei Säschare, ein Trag-/ Führungsrad und / oder mehrere Druckrollen auf. Das Tragrad übernimmt die Funktion der Tiefenführung, während die Druckrollen oder Zustreichelemente, beispielsweise in Form von Striegeln, dazu dienen, die Furchen zu schließen und den Boden bei Bedarf rückzuverfestigen.

Die Säschare befinden sich an Schartragarmen. Diese sind am Grundrahmen /Schartragrohr schwenkbar angebracht und können an diesem unabhängig vom Tragradarm angelenkt werden. Beispielsweise können die Schararme gummigelagert sein. An den Schararmen befindet sich ein abstützendes Verbindungselement bzw. Mitnehmerelement. Dieses liegt mit dem freien Ende auf dem Tragrad tragenden Arm auf. Wird die Säschar durch ein Hindernis, beispielsweise durch einen Stein, angehoben, dann kann die Säschar mit einer Schwenkbewegung vertikal nach oben ausweichen. Die Position des Tragrads wird durch die Schwenkbewegung der Säschar und des Schartragarmes nicht beeinflusst.

Wird dagegen der Tragarm, an dem das Tragrad befestigt ist, durch ein Hindernis angehoben, dann wird die Säschar bzw. werden die beiden Säscharen durch die Koppelung mit dem Mitnehmerelement(en) in der nach oben gerichteten Bewegung mitgenommen.

Das Mitnehmerelement begrenzt weiterhin die vertikale Schwenkbewegung der Säschar nach unten, d.h. aufgrund des Aufliegens des Mitnehmerelementes auf dem Tragradarm bestimmt das Tragrad die maximale Eintauchtiefe der Säschar.

Die Funktion der Tiefenführung wird von dem Führungs- / Tragrad übernommen, welches neben den Saatreihen verläuft. Gemäß einer bevorzugten Ausführungsform der Erfindung kann das Tiefenführungsrad mittig zwischen den Saatreihen verlaufen. Das in seiner Höhe verstellbare Führungsrad, welches auch als Tragrad bzw. - rolle bezeichnet wird, kann beispielsweise eine Rolle aus lackiertem Gusseisen oder einem anderen stabilen, wetterbeständigem Material sein, es können aber auch Gummirollen oder-räder oder aber luftgefüllte Reifen zum Einsatz kommen.

Die Verstellung der Tiefenführung durch das Tragrad erfolgt beispielsweise durch Verstellung der Neigung des Tragradarmes, der unabhängig von den Schararmen schwenkbar am Grundrahmen angelenkt ist.

Bei der gezogenen Moduleinheit Säscharanordnung gemäß begrenzt das Tragrad das Säschar also in der Tiefe, wobei das Säschar nach oben und seitlich ausweichen kann.

Die Druckrolle übt in der vorliegenden Erfindung hauptsächlich die Funktion der Rückverfestigung aus. Da bei verschiedenen Böden unterschiedliche Rückverfestigungsstrategien benötigt werden, können die Druckrollen in dem erfindungsgemäßen Gerät separat eingestellt werden, um eine optimale Abstimmung auf die Bodenbedingungen zu erreichen. Die Säschar und die Druckrolle bilden eine Einheit, wobei die Druckrolle in ihrer Position verändert werden kann. Die am Tragarm des Tragrades befestigten Druckrollen können über ein arretierbares Gelenk / Verstellverbindung in der Horizontalen und/oder in der Vertikalen verstellt werden. Die Einstellung in der Vertikalen bewirkt eine Veränderung des ausgeübten Drucks, d.h. das Saatgut wird mehr oder weniger stark in der Säfurche angedrückt. Die Einstellung in der Vertikalen führt zu verschiedenen Positionen der Druckrolle, so dass diese entweder auf oder neben der Säfurche verläuft. Die Druckrolle bzw. Druckrollen können auch über verstellbare Gelenke direkt am Tragrad befestigt sein. Die Verbindung kann starr oder gefedert ausgeführt sein.

Die Druckrolle ist hierbei seitlich versetzt zum Tragrad angeordnet. Gemäß einer weiteren Ausgestaltung der Erfindung können einem Tragrad auch zwei Druckräder zugeordnet sein, so dass sich das Tragrad zwischen den beiden Druckrädern befindet. Die Druckrollen können seitlich hinter dem Tragrad, seitlich vor dem Tragrad oder seitlich neben dem Tragrad verlaufen.

Gemäß einer bevorzugten Ausgestaltung der Erfindung sind das wenigstens eine Druckrad und das wenigstens eine Tragrad annähernd nebeneinander bzw. in Fahrtrichtung leicht versetzt zueinander angeordnet. Hierdurch kann verhindert werden, dass aufgrund unkontrollierter Erdbewegungen bei weiter auseinander stehenden Trag- und Druckrädern der gewünschte Effekt der exakt einstellbaren Tiefenführung und Rückverfestigungskraft abgeschwächt bzw. zunichte gemacht wird. Dies betrifft insbesondere relativ leichte Böden, bei denen unkontrollierte Erdbewegungen hinter den Rädern nicht verhindert werden können.

Die Druckrolle kann wie auch die Tragrolle eine Rolle aus lackiertem Gusseisen oder einem anderen stabilen, wetterbeständigem Material sein, es können aber auch Gummirollen oder -räder oder luftgefüllte Reifen zum Einsatz kommen.

Die Druckrollen können gemäß einer weiteren Ausgestaltung der Erfindung als seitliche Abstreifer für das Tragrad fungieren, um zu verhindern, dass die geführte Tiefe durch starke Verschmutzung des Tragrads, beispielsweise durch anhaftenden Erdboden oder Pflanzenteile, verändert wird.

Die Trennung der Funktionen Tiefenführung und Rückverfestigung ermöglicht eine perfekte Tiefenführung auch bei veränderter Position der Druckrolle. Die Trennung der beiden Hauptfunktionen bewirkt zudem, dass die Säeinheit das Andruckverhalten der Druckrolle beispielsweise bei unterschiedlichen Bodenverhältnissen, Arbeitsgeschwindigkeiten oder Hindernissen nicht beeinflusst, und somit ein gleichmäßiges, einstellbares Andrücken durch die Druckrolle gewährleistet bleibt.

Für die Verstellung der Druckrolle ist ein z.B. zentraler Verstellmechanismus sowohl mit elektromotorischer, pneumatischer oder auch hydraulischer Steuerung denkbar. Die Steuerung kann sich direkt am Bodenbearbeitungsgerät befinden, beispielsweise unter einer schützenden Abdeckung. Eine andere Möglichkeit stellt die direkte elektronische Steuerung aus dem Fahrerhaus der Zugmaschine (beispielsweise des Traktors) dar. Eine weitere Möglichkeit wäre eine mechanische Feinjustierung und Arretierung der Druckrollen.

Die Druckrollen werden derart am Tragrad bzw. am Tragradarm angebracht, dass sie sich in einer Linie mit den Säscharen befinden oder aber leicht seitlich versetzt angeordnet sind. Die Druckrollen können dabei parallel oder leicht schräg zur Saatrille ausgerichtet werden, um eine optimale Rückverfestigung angepasst an die jeweiligen Bodenverhältnisse zu erzielen.

Den Druckrollen und / oder dem Tragrad können Zustreichelemente, beispielsweise Striegel, zugeordnet sein. Gemäß einer weiteren Ausführungsform können die Druckrollen durch Zustreichelemente ersetzt werden.

Gemäß einer weiteren Ausführungsform kann die Saattiefe auch über einen Schararmhöhenverstellung am Grundrahmen eingestellt werden oder aber über eine Abstandsveränderung zwischen dem Mitnehmerelement und dem Tragradarm.

Mehrere Moduleinheiten Säscharanordnung können nebeneinander über einen Grundrahmen, beispielsweise ein Schartragrohr, zu einer Gesamteinheit Säschar zusammengefasst werden.

Die Zuleitung des Saatguts zur Säschar, welche zum Beispiel die Form einer Einzelscheibenschar, Doppelscheibenschar, Zinkenschar oder einer Sichelschar haben kann, erfolgt beispielsweise durch eine pneumatisch arbeitende Verteilmaschine. Das Saatgut befindet sich in einem Vorratsbehälter und wird über ein Dosierorgan an einen Verteiler weitergeleitet, der das Saatgut der Säschar zuführt.

Weiterhin kann die beschriebene Anordnung auch verwendet werden, um Düngemittel auszubringen.

Herkömmliche Scharanordnungen können einfach umgerüstet werden, so dass eine erfindungsgemäße Moduleinheit entsteht. Zwischen zwei Schararme wird ein Tragradarm mit Tragrad angebracht. Die Druckrollen, die bei einer herkömmlichen Scharanordnung am Schararm befestigt sind, werden stattdessen am Tragrad oder am Tragradarm befestigt.

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt.
Fig. 1 zeigt eine schematische seitliche Darstellung einer erfindungsgemäßen Moduleinheit Säscharanordnung,
Fig. 2 zeigt eine schematische Draufsicht der Moduleinheit Säscharanordnung gemäß Fig.1 mit zwei Druckrollen und
Fig. 3 zeigt eine weitere schematische seitliche Darstellung einer erfindungsgemäßen Moduleinheit Säscharanordnung mit zwei Druckrollen.

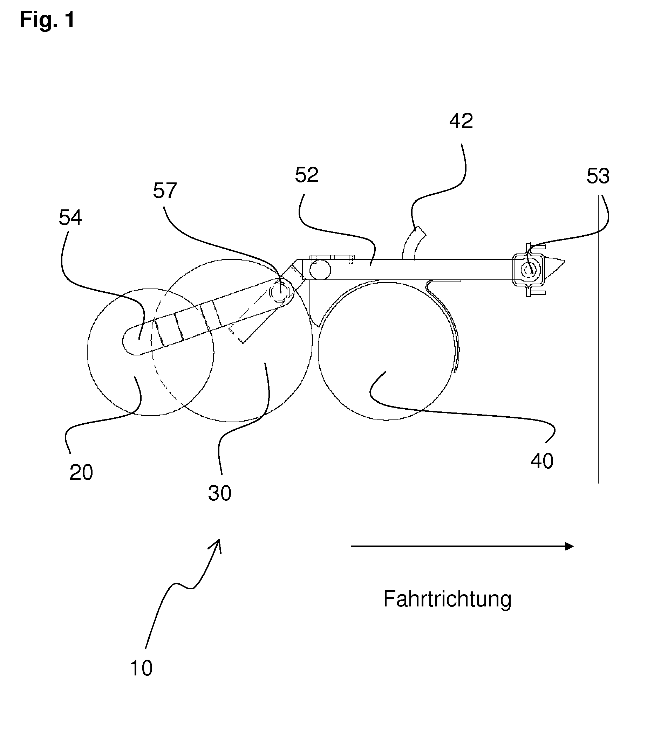

Eine mögliche Ausgestaltung einer erfindungsgemäßen Moduleinheit Säscharanordnung mit unabhängig voneinander frei nach oben schwenkbeweglich angeordneten Säscharen und getrennter Tiefenführungs- und Druckanordnung wird anhand der Figuren 1, 2 und 3 illustriert.

Gezeigt ist jeweils eine Moduleinheit 10 einer Säscharanordnung, von denen mehrere über einen Grundrahmen 18 zu einer Gesamteinheit Säschar zusammengefasst werden.

Die Anordnung weist einen Werkzeugträger 50 auf, welcher im hinteren Teil im stumpfen Winkel nach unten abknickt und mit einem Tragrad oder -rolle 30 zur Tiefenführung verbunden ist. Weiterhin ist der Werkzeugträger 50 über abstützende Verbindungsstücke / Mitnehmerelemente 56 mit Schararmen 52 verbunden.

Die Säschare 40 sind an den Schartragarmen 52 befestig, an denen auch das abstützendes Verbindungselement / Mitnehmerelement 56 angebracht ist. Dieses liegt mit dem freien Ende auf dem das Tragrad 30 tragenden Arm 50 auf. Wird die Säschar 40 durch ein Hindernis angehoben, dann kann die Säschar 40 mit einer Schwenkbewegung vertikal nach oben ausweichen. Die Position des Tragrads 30 wird durch die Schwenkbewegung der Säschar 40 und des Schartragarmes 52 nicht beeinflusst.

Wird dagegen der Tragarm 50, an dem das Tragrad 30 befestigt ist, durch ein Hindernis angehoben, dann wird die Säschar 40 durch die Koppelung mit dem Mitnehmerelement 56 in der Bewegung nach oben mitgenommen.

Das Mitnehmerelement 56 begrenzt die vertikale Schwenkbewegung der Säschare 40 nach unten, da durch Aufliegen des Mitnehmerelementes 56 auf dem Tragradarm 50 eine weitere Bewegung der Säschare 40 nach unten verhindert wird. Somit bestimmt das Tragrad 30 die maximale Eintauchtiefe der Säschare 40.

An dem Schararm 52 befindet sich eine Säschar 40, beispielsweise in Form einer Scheibenschar. Der Saatgutzulauf 42, durch den die Saat in die Säschar 40 gelangt, ist in den Schararm 52 integriert.

Die Schararme 52 werden über Befestigungselemente 53 an einem Scharträgerelement 18, beispielsweise in Form eines Schartragrohrs (nicht dargestellt), befestigt. Somit können mehrerer Moduleinheiten der Säscharanordnung zu einer Gesamteinheit Säschar zusammengefasst werden. Die Befestigung mittels der Elemente 53 kann gummigelagert ausgeführt sein.

Am Tragrollenträgerarm 50 sind über arretierbare Verstellgelenke 57 die Druckrollentragarme 54 gehaltert, an denen sich die Druckräder oder -rollen 20 befinden.

Die Säschar 40 bereitet die Säfurche vor und bringt das durch die Saatgutzuführung 42 zugeführte Saatgut in den Boden ein.

Das Tragrad 30 läuft neben oder mittig zwischen zwei Saatreihen und dient der Tiefenführung.

Die Druckrolle 20 dient der Rückverfestigung des Bodens über dem Saatgut. Die bei vielen herkömmlichen Säscharen ebenfalls vom Druckrad 20 ausgeführte Funktion der Tiefenführung ist in einer erfindungsgemäßen Säscharanordnung nicht vorgesehen, diese Funktion wird von der mittig laufenden Tragrolle 30 ausgeführt.

Der von der Druckrolle 20 auf den Boden ausgeübte Druck kann durch Veränderung der Neigung des Tragarms 54 über das arretierbare Gelenk 57 verstellt werden. Weiterhin kann über das arretierbare Gelenk 57 auch die horizontale Entfernung des Druckrads 20 bezüglich des Tragrads 30 verändert werden, so dass das Druckrad 20 entweder direkt hinter der Säschar 40 oder aber seitlich versetzt zu diesem läuft. Die beschriebenen zwei Möglichkeiten der Verstellung der Positionierung ermöglichen eine einfache Einstellung der gewünschten Rückverfestigung. Es ist also mit dieser einen Anordnung möglich, den Boden direkt über dem Saatgut als auch leicht versetzt daneben anzudrücken, weiterhin kann die Höhe des verwendeten Druck durch Veränderung der Neigung des Tragarms 54 beliebig variiert werden.

Die Einstellung der Druckrolle 20 kann bspw. elektromotorisch, pneumatisch oder auch hydraulisch gesteuert werden. Dabei kann sich die Steuerung direkt am Bodenbearbeitungsgerät, beispielsweise unter einer schützenden Abdeckung, befinden. Eine andere Möglichkeit stellt die direkte elektronische Steuerung aus dem Fahrerhaus der Zugmaschine (beispielsweise des Traktors) dar. Weiterhin wäre auch eine mechanische Verstellung und Arretierung der Druckrollen 20 eine Möglichkeit zur Feinjustierung des Systems.

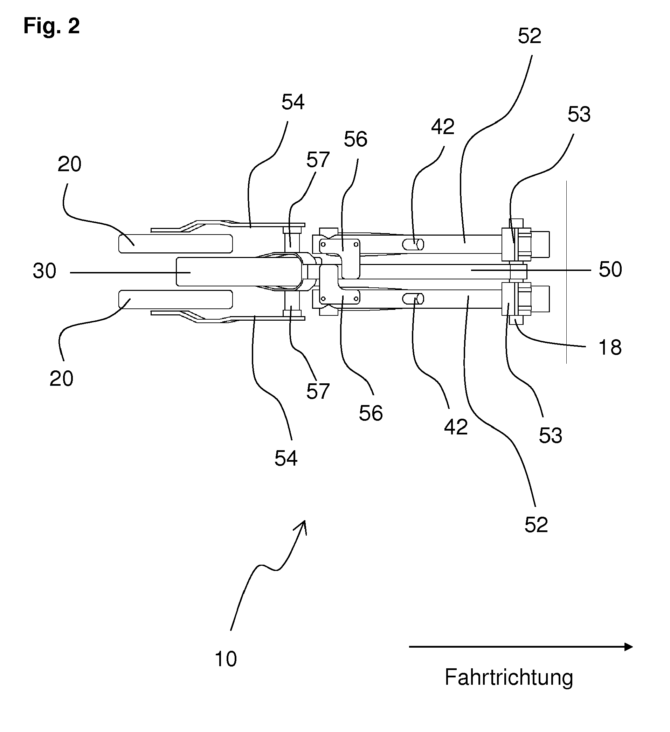

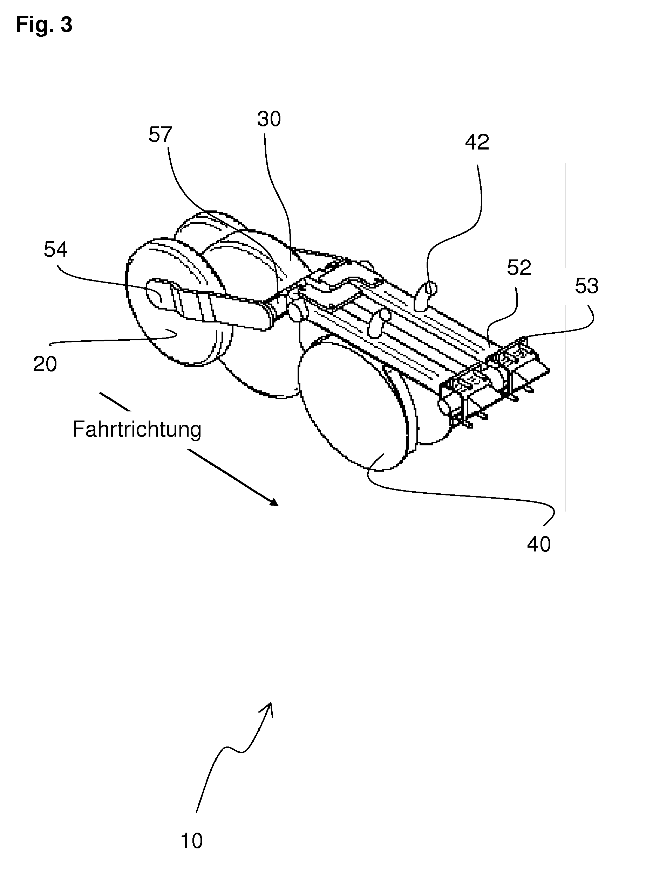

Bei der in Fig. 1 dargestellten Säscharanordnung sind einem Tragrad jeweils eine Säschar und auch eine Druckrolle zugeordnet; dagegen zeigen Fig. 2 und 3 jeweils eine Moduleinheit Säscharanordnung, bei der einem Tragrad jeweils zwei Säscheiben und zwei Druckräder zugeordnet sind.

Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein. Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen.

## Patentansprüche

1. Gezogene Säscharanordnung zum Ausbringen von Saatgut, mit mehreren Säscharmodulen (10), mit mehreren Tragrädern (30) zur Tiefenführung und/oder mit mehreren Druckrollen (20) zur Rückverfestigung, wobei ein Säscharmodul (10) wenigstens eine, vorzugsweise zwei Säscharen (40) und ein Tragrad (30) aufweist und die Säschare (40) unabhängig voneinander und unabhängig vom Tragrad (30) vertikal noch oben frei schwenkbeweglich sind, während der Schwenkbereich vertikal nach unten durch die jeweilige Höhenlage des Tragrads (30) begrenzt ist.

2. Gezogene Säscharanordnung nach Anspruch 1, wobei jede Säschar (40) an einem Schararm (52) angeordnet ist, der an einem Grundrahmen (18) schwenkbar gehaltert ist.

3. Gezogene Säscharanordnung nach Anspruch 1 oder 2, wobei das Tragrad (30) an einem Tragarm (50) angeordnet ist, der am Grundrahmen (18) schwenkbar gehaltert ist.

4. Gezogene Säscharanordnung nach einem der vorangehenden Ansprüche, wobei an jedem Schararm (52) ein Mitnehmerelement (56) angeordnet ist, das in jeweils tiefster Lage der Säschar (40) frei auf dem Tragarm (50) aufliegt.

5. Gezogene Säscharanordnung nach einem der vorangehenden Ansprüche, wobei die Druckrollen (20) seitlich variabel am Tragrad (30) oder am Tragradträgerarm (50) befestigt sind.

6. Gezogene Säscharanordnung nach einem der vorangehenden Ansprüche, wobei das Tragrad (30) einer Moduleinheit (10) einzeln einstellbar ist

7. Gezogene Säscharanordnung nach einem der vorangehenden Ansprüche, wobei die Druckrollen (20) zur Rückverfestigung variabel einstellbar sind.

8. Gezogene Säscharanordnung nach einem der vorangehenden Ansprüche, wobei die Druckrollen (20) gefedert oder starr am Tragrad (30) oder am Tragradarm (50) befestigt sind.

9. Gezogene Säscharanordnung nach einem der vorangehenden Ansprüche, wobei die Schare (40) beweglich angeordnet sind, so dass die Schare (40) bei Hindernissen, insbesondere bei Steinen, seitlich ausweichen können.

10. Gezogene Säscharanordnung nach einem der vorangehenden Ansprüche, wobei die Einstellung des Rückverfestigungsgrades durch einen zentralen Verstellmechanismus der Druckrollen (20) erfolgt.

11. Gezogene Säscharanordnung nach einem der vorangehenden Ansprüche, wobei bekannte Systeme entsprechend nachrüstbar sind.

12. Gezogene Säscharanordnung nach einem der vorangehenden Ansprüche, wobei die Druckrollen (20) genau in einer verlängerten Linie hinter den Säscharen (40) oder leicht seitlich versetzt angeordnet sind.

13. Gezogene Säscharanordnung nach einem der vorangehenden Ansprüche, wobei dem Tragrad (30) und / oder den Druckrollen (20) ein Zustreichelement, insbesondere ein Striegel, zugeordnet ist.

14. Gezogene Säscharanordnung nach einem der vorangehenden Ansprüche, wobei anstelle von Druckrollen (20) Zustreichelemente am Tragrad (30) oder am Tragradarm (50) angeordnet sind.

15. Gezogene Säscharanordnung nach einem der vorangehenden Ansprüche, wobei die Saattiefe über die Scharschienenhöhenverstellung des Grundrahmens (18) einstellbar ist.

16. Gezogene Säscharanordnung nach einem der vorangehenden Ansprüche, wobei die Saattiefe über eine Abstandsveränderung zwischen dem Tragrad (30) und der abstützenden Verbindung (56) einstellbar ist.
